# FASCICULE DE BREVET EUROPEEN

(11) **EP 4 012 728 B1**
(45) Date de publication et mention de la délivrance du brevet: **07.02.2024**
(21) Numéro de dépôt: 21212053.9
(22) Date de dépôt: 02.12.2021
(51) Int. Cl.: H01F 1/00, H01F 3/08, H01F 17/04, H01F 41/16, H01F 41/24

(54) **MATÉRIAU ÉLECTROMAGNÉTIQUE ET INDUCTANCE POUR LES BASSES TEMPÉRATURES**
ELEKTROMAGNETISCHES MATERIAL UND INDUKTIVITÄT FÜR NIEDRIGE TEMPERATUREN
ELECTROMAGNETIC MATERIAL AND INDUCTANCE FOR LOW TEMPERATURES

(30) Priorité: 08.12.2020 FR 2012856
(43) Date de publication de la demande: 15.06.2022
(73) Titulaire: Commissariat à l'Energie Atomique et aux Energies Alternatives, 75015 Paris (FR)
(72) Inventeur: VIALA, Bernard, 38054 Grenoble Cedex 09 (FR)
(74) Mandataire: Cabinet Beaumont

(56) Documents cités:
- FR-A1- 2 953 028
- US-A1- 2012 012 778
- US-A1- 2012 229 238
- US-A1- 2013 342 069

## Description

### Domaine technique

La présente description concerne de façon générale les inductances et plus précisément les inductances destinées aux ordinateurs quantiques. La présente description concerne plus particulièrement un matériau électromagnétique pour la réalisation d'inductances fonctionnant à basses températures pour dispositifs quantiques.

### Technique antérieure

Dans les ordinateurs quantiques, les inductances comme l'ensemble des composants électroniques situés autour du coeur de l'ordinateur quantique sont portés à très basse température (au plus proche de 0 K) afin de limiter les perturbations thermiques issues de ces composants. Les inductances connues qui se rapprochent le plus du cahier des charges lié aux fréquences de travail des ordinateurs quantiques sont, à ce jour, les inductances développées entre autres pour les applications liées aux télécommunications 5G. Les inductances utilisées actuellement dans la technologie 5G sont réalisées en couches minces sur silicium avec les moyens de la microélectronique actuelle. Elles sont constituées d'une multitude de couches minces en matériaux diélectriques (oxydes et nitrures métalliques, polymères ...), conducteurs (Al, Cu, Au, Ni) et magnétiques (films amorphes ou nanocristallins à base de Fe, Co, Ni). Toutes ces couches sont déposées sur un substrat (Si, SOI, verre, céramique etc.). Ces inductances sont conçues pour fonctionner à des températures comprises entre -40°C et +85°C et peuvent supporter des températures de fabrication jusqu'à 400°C. Mais si la température d'utilisation se rapproche de 0K, comme dans le cas des applications quantiques, le composant subira des forces de compression très importantes (puisqu'il a été dilaté au moment de sa fabrication) provoquant généralement la décohésion des couches, des ruptures de connections électriques et même des fracturations du substrat.

Dans des technologies hybrides plus émergentes, on tend à réduire le nombre de couches minces à fort bilan thermique et à les remplacer par des polymères fonctionnels qui se déposent à température ambiante. Par exemple, le matériau magnétique en multicouches peut être remplacé par un polymère épais contenant des particules ferromagnétiques qui fait aussi office d'isolant électrique avec les spires de l'inductance et de résine d'encapsulation. La fiabilité mécanique et électrique face aux variations thermiques, notamment, négatives est améliorée. De plus, les polymères résistent très bien aux très basses températures.

Cependant, pour obtenir des fréquences d'utilisation élevées (5 à 10 GHz), il est nécessaire de recourir à des particules ferromagnétiques submicroniques par exemple inférieures à 100 nm pour limiter les pertes au-delà de 1 GHz.

La manipulation de ces particules ferromagnétiques est extrêmement délicate parce qu'elles conservent une aimantation rémanente à la température ambiante. Elles agissent par conséquent comme de très petits « aimants » qui s'attirent tête-bêche et se collent l'une à l'autre. En pratique, ce type de nanoparticules s'agglomèrent spontanément et il est particulièrement difficile de les séparer. Cela constitue des agrégats conducteurs au sein du polymère qui génèrent les pertes en excès à partir de 1 GHz qui n'est pas souhaitable.

FR 2 953 028 décrit des nanoparticules métalliques à comportement superparamagnétique de taille non-divulguée.

US 2012/229238 et US 2013/342069 divulguent des nanoparticules basées sur un oxyde de fer à comportement superparamagnétique de taille 5-25 nm.

### Résumé de l'invention

Il existe un besoin d'améliorer les inductances pour les ordinateurs quantiques.

Un mode de réalisation pallie tout ou partie des inconvénients des inductances des ordinateurs quantiques connus.

Un mode de réalisation prévoit plus particulièrement un matériau électromagnétique adapté à la réalisation d'inductances.

Comme spécifié dans la revendication 1, un mode de réalisation prévoit un matériau électromagnétique pour inductance à fonctionnement à des températures cryogéniques comportant, dans une matrice électriquement isolante, des nanoparticules métalliques à comportement superparamagnétique de taille inférieure ou égale à 30 nm.

Selon un mode de réalisation, chaque particule s'inscrit dans un cube ou un parallélépipède d'une taille inférieure ou égale à 20 nm.

Selon un mode de réalisation, chaque particule s'inscrit dans un cube ou un parallélépipède d'une taille inférieure ou égale à 10 nm.

Selon un mode de réalisation, la perméabilité magnétique de chaque particule est supérieure à 3.

Selon un mode de réalisation, la matrice est un polymère.

Selon un mode de réalisation, la matrice est un oxyde métallique.

Selon un mode de réalisation, la matrice est un oxyde de graphène.

Selon un mode de réalisation, les particules comprennent du fer, du cobalt, du nickel, et/ou un alliage de ces métaux.

Selon un mode de réalisation, les particules sont les carbures ou nitrures de fer tels que Fe₃C, Fe₅C₂, Fe₂N, Fe₄N, Fe₁₆N₂.

Selon un mode de réalisation, les particules sont recouvertes d'une couche superficielle de protection en matériau inorganique ou organique tels le graphène, le graphite, le carbone amorphe, un oxyde métallique ou un polymère.

Un mode de réalisation prévoit un élément inductif comportant un matériau électromagnétique, tel que décrit ci-avant, caractérisé en ce sens que la valeur d'inductance est plus élevée (par exemple de 10 %, 30 %, 50 %, 100 %, 200 %) à une température inférieure ou égale à 4 K qu'à la température ambiante.

Selon un mode de réalisation, l'élément inductif fonctionne à une température inférieure ou égale à 4K.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente schématiquement par des vues A et B, deux modes de réalisation d'inductance ;
la figure 2 représente par une vue en coupe, un matériau magnétique de l'inductance illustrée en vue B de la figure 1 ;
la figure 3 représente par un schéma bloc un procédé de mise en oeuvre d'une solution ;
la figure 4 représente par un schéma bloc un autre procédé de mise en oeuvre de la solution ; et
la figure 5 représente par un schéma bloc un procédé de mise en oeuvre du matériau illustré en figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les spires de bobine, leur forme, leur dimension et leur matériau n'a pas été détaillé, le matériau électromagnétique décrit ci-après étant compatible avec les bobines usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

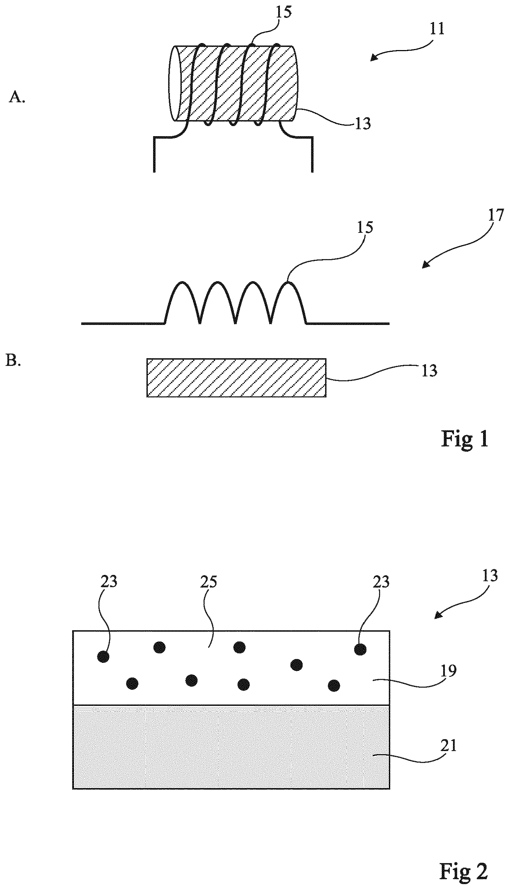

La figure 1 représente schématiquement par des vues A et B, deux modes de réalisation d'inductance.

Plus particulièrement, la figure 1 illustre en vue A le schéma d'une inductance 11 dans laquelle un matériau magnétique 13 est situé dans les spires d'une bobine 15 et en vue B le schéma d'une inductance 17 dans laquelle le matériau magnétique est situé sous (ou au dessus) un enroulement plan 15 (en général, sous forme de spirale).

Les inductances sont des composés électroniques ayant la capacité de stocker de l'énergie magnétique lorsqu'ils sont traversés par un courant. Les inductances sont utilisées dans de nombreux domaines électroniques et notamment dans les calculateurs quantiques, également appelés ordinateurs quantiques.

Comme indiqué précédemment, dans les ordinateurs quantiques, les inductances comme l'ensemble des composants électroniques situés autour du coeur de l'ordinateur quantique sont portés à très basse température (au plus proche de 0 K), par exemple à 4 K, afin de limiter les perturbations thermiques issues de ces composants. Alors que les inductances usuelles sont adaptées à subir des dilatations, elles ne sont, en revanche, pas adaptées à résister à des températures aussi basses.

La figure 2 représente par une vue en coupe, le matériau magnétique 13 de l'inductance 17 illustrée en vue B de la figure 1.

Plus particulièrement, le matériau magnétique 13 comprend un assemblage d'un matériau électromagnétique 19 et d'un substrat 21.

Le substrat 21 est, de préférence, un substrat en un matériau semiconducteur, par exemple, en silicium. Le substrat 21 est de préférence, une plaquette (wafer) en silicium. Le substrat 21 a, par exemple, une épaisseur comprise entre 200 µm et 800 µm.

Le matériau électromagnétique 19 comprend des particules magnétiques métalliques 23 dans une matrice électriquement isolante 25.

Les particules magnétiques métalliques 23 peuvent être sphériques, hexagonales, cubiques, cylindriques ou avoir une forme quelconque. Chaque particule magnétique métallique 23 s'inscrit dans un cube ou un parallélépipède dont le plus petit côté est inférieur ou égal à environ 30 nm, c'est-à-dire dont la taille est inférieure ou égale à environ 30 nm. De préférence, chaque particule magnétique métallique 23 s'inscrit dans un cube ou un parallélépipède dont le plus petit côté est inférieur ou égal à environ 20 nm, c'est-à-dire dont la taille est inférieure ou égale à environ 20 nm. Plus préférentiellement, chaque particule magnétique métallique 23 s'inscrit dans un cube ou un parallélépipède dont le plus petit côté est inférieur ou égal à environ 10 nm, c'est-à-dire dont la taille est inférieure ou égale à environ 10 nm. A titre d'exemple, la dimension caractéristique d'une particule magnétique métallique 23 correspond au diamètre de la particule magnétique métallique 23 si celle-ci est sphérique ou à la dimension d'un côté de la particule magnétique métallique 23 si celle-ci est cubique.

Les particules magnétiques métalliques 23 ont un comportement superparamagnétique, c'est-à-dire que leur aimantation peut se renverser spontanément sous l'influence de la température. Ainsi, on peut dire par simplification de langage que les particules magnétiques métalliques 23 ne sont pas aimantées à température ambiante (c'est-à-dire environ 25 °C ou 298 K) mais le deviennent à des températures très faibles, typiquement inférieures à 4 K.

Les particules magnétiques métalliques 23 peuvent être en un matériau ayant une perméabilité magnétique supérieure à 1,5 pour des fréquences comprises entre 5 GHz et 50 GHz. Les particules magnétiques métalliques 23 sont, de préférence, en un matériau ayant une perméabilité magnétique supérieure à 2 et plus préférentiellement supérieure à 3 pour des fréquences comprises entre 5 GHz et 50 GHz.

Les particules magnétiques métalliques 23 sont, de préférence, en fer (Fe), en cobalt (Co) et/ou en nickel (Ni). Les particules 23 sont, par exemple, en un matériau choisi parmi le fer (Fe), le cobalt (Co), le nickel (Ni), et leurs alliages, les carbures de fer (Fe₃C ou Fe₅C₂) ou un nitrure de fer (Fe₂N, Fe₄N ou Fe₁₆N₂).

A titre d'exemple, les particules de l'alliage fer-cobalt (FeCo) sont superparamagnétiques à température ambiante si chacune d'entre elle peut s'inscrire dans un cube de côté inférieur ou égal à 23 nm. Selon un autre exemple, les particules de fer sont superparamagnétiques à température ambiante si chacune d'entre elle peut s'inscrire dans un cube de côté inférieur ou égal à 16 nm. Selon encore un autre exemple les particules de cobalt sont superparamagnétiques à température ambiante si chacune d'entre elle peut s'inscrire dans un cube de côté inférieur ou égal à 8 nm.

Les particules 23 peuvent être recouvertes d'un film de protection ou coquille de protection afin de les protéger contre l'oxydation. A titre d'exemple, la coquille peut être en carbone (de type graphène, graphite ou amorphe) et/ou en oxyde métallique (silice ou alumine).

La matrice isolante 25 est, de préférence, composée d'un matériau choisi parmi un polymère, de l'oxyde de graphène ou un oxyde métallique. La matrice isolante 25 est, par exemple, en polystyrène (PS) ou en époxy.

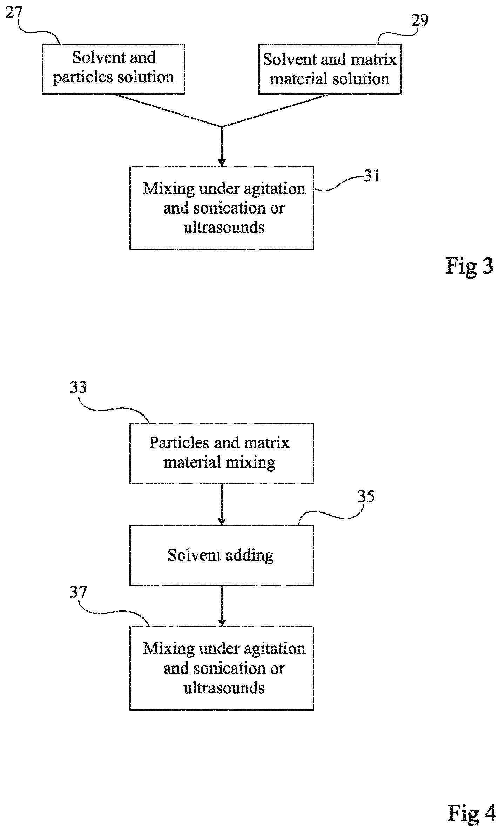

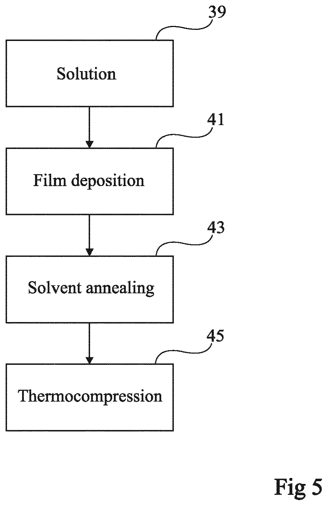

Un mode de mise en oeuvre du matériau 13 est décrit en relation avec la figure 5 à partir d'une solution fabriquée selon l'un ou l'autre des procédés décrits en relation avec les figures 3 et 4.

La figure 3 représente par un schéma bloc un procédé de mise en oeuvre d'une solution.

Plus particulièrement, la figure 3 illustre le procédé de mise en oeuvre d'une solution comprenant les particules magnétiques métalliques 23 et la matrice isolante 25 en solution.

Les particules magnétiques métalliques 23 sont, dans une première étape 27 mises en solution dans un premier solvant (Solvent and particules solution) . Lors de cette étape, la dispersion des particules magnétiques métalliques 23 dans le solvant peut être assistée par une agitation mécanique. La dispersion des particules magnétiques métalliques 23 est, en outre, assistée par sonication, ultrasonication ou ultrasons.

Un avantage qui apparaît est que la dispersion des particules magnétiques métalliques 23 est facilitée du fait que, à température ambiante, ces dernières ne sont pas aimantées. Les particules 23 se regroupent alors peu en agrégats et peuvent être mieux séparés avec une puissance et un temps de sonication moindre (c'est-à-dire une puissance comprise entre 0,5 W et 50 W contre une puissance de 500 W pour casser des agrégats de particules magnétiques). Lorsque la puissance et le temps de sonication est important (quelques centaines de Watts pendant plusieurs dizaines de minutes), les particules 23 peuvent être endommagées.

Lors de l'étape 27, un polymère diélectrique est, optionnellement, greffé à la surface des nanoparticules magnétiques 23. Ce greffage, par exemple, assisté par sonication, permet d'assurer l'isolation électrique entre les particules. Le polymère diélectrique, est, par exemple, greffé sous forme d'une très fine couche, de l'ordre de quelques nanomètres, par exemple d'une épaisseur égale à environ 4 nm.

En parallèle de l'étape 27, la matrice isolante est mise en solution dans un deuxième solvant lors d'une étape 29 (Solvent and matrix material solution). L'étape 29 peut, en variante, être réalisée avant ou après l'étape 27.

Le premier solvant peut être différent ou identique du deuxième solvant, le premier solvant et le deuxième solvant sont toutefois miscibles.

Lors de l'étape 29, la dissolution de la matrice isolante 25 dans le deuxième solvant peut être assistée par agitation mécanique et, éventuellement, par ultrasons.

Dans une étape 31 postérieure aux étapes 27 et 29, la solution comprenant les particules magnétiques métalliques 23 et la solution comprenant la matrice isolante 25 sont mélangées (Mixing under agitation and sonication or ultrasounds), de préférence sous agitation mécanique et sous sonication ou sous ultrasons.

En variante, la matrice isolante 25 n'est pas mise en solution dans l'étape 29 et est ajoutée directement à l'étape 31.

La figure 4 représente par un schéma bloc un autre procédé de mise en oeuvre de la solution.

La figure 4 illustre un procédé similaire au procédé illustré en figure 3 à la différence près que les particules magnétiques métalliques 23 sont, dans une étape 33 mélangées avec la matrice isolante 25 (Particles and matrix material mixing) avant d'ajouter au mélange un solvant dans une étape 35 (Solvent adding). Similairement au procédé illustré en figure 3, la dispersion des particules 23 dans le solvant et la dissolution de la matrice 25 dans ce même solvant sont assistées par sonication et/ou par ultrasons (étape 37, Mixing under agitation and sonication or ultrasonds).

Ainsi, alors que l'on n'aurait pas tendance à utiliser ces nanoparticules au comportement superparamagnétique pour réaliser des éléments inductifs en raison de leur absence d'efficacité (c'est-à-dire n'ayant pas de contribution à l'inductance) à température ambiante qui est habituellement le comportement évalué, on prévoit ici de tirer profit de leur changement de comportement entre la température ambiante et les températures proches du zéro Kelvin afin de bénéficier des autres caractéristiques de ces nanoparticules lorsqu'elles sont à température ambiante ou supérieure, et en particulier la facilité donnée de les maintenir en suspension à température ambiante, et de les disperser de manière homogène, c'est-à-dire sans agrégats.

La figure 5 représente par un schéma bloc un procédé de mise en oeuvre du matériau illustré en figure 2.

Plus particulièrement, la figure 5 illustre un procédé de mise en oeuvre du matériau illustré en figure 2 à partir de la solution réalisée en figure 3 ou 4.

La solution est, dans une première étape 39, préparée selon l'un des procédés de mise en oeuvre décrits en relation avec les figures 3 et 4 (Solution). A la suite de l'étape 39, la solution est déposée, lors d'une étape 41, à la surface du substrat (21, figure 2). Lors de l'étape 41, un film humide est formé (Film déposition). Selon un mode de réalisation l'étape 41 est réalisée par centrifugation (spin-coating) ou par dépôt à la flaque (puddle-coating).

Selon un autre mode de réalisation, l'étape 41 est réalisée par jet d'encre (ink jet), par dépôt par aérosol (spray) ou par moulage par injection (injection molding).

A la suite de l'étape 41, la structure composée du film et du substrat (21, figure 2) subit, lors d'une étape 43, un recuit (Solvant annealing) de façon à évaporer les traces de solvant présentes dans le film et à former le matériau 19. Le recuit est, de préférence, réalisé à une température de l'ordre de 100 °C pendant environ 10 minutes.

L'étape 43 peut être suivie par une étape 45 de compression thermique (thermocompression) permettant de densifier le matériau 19 et l'aplanir.

Un avantage des modes de réalisation et des modes de mise en oeuvre décrits est qu'ils permettent de s'affranchir de l'agglomération spontanée usuelle des particules magnétiques submicroniques.

Un autre avantage des modes de réalisation et des modes de mise en oeuvre décrits est qu'ils permettent d'obtenir un matériau électromagnétique dans lequel les particules magnétiques métalliques ont une dispersion homogène dans la matrice isolante.

Encore un autre avantage des modes de réalisation et des modes de mise en oeuvre décrits est qu'ils permettent de simplifier l'étape de dispersion des particules dans la matrice isolante ou dans le solvant et ainsi préserver l'état de surface des particules.

Encore un autre avantage des modes de réalisation et des modes de mise en oeuvre décrits est qu'ils permettent d'apporter au matériau électromagnétique une meilleure isolation électrique et de réduire les pertes électromagnétiques en comparaison aux matériaux usuellement utilisés dans les inductances.

## Revendications

1. Matériau électromagnétique (13) pour inductance à fonctionnement à des températures cryogéniques comportant, dans une matrice électriquement isolante (25), des nanoparticules métalliques (23) à comportement superparamagnétique de taille inférieure ou égale à 30 nm.

2. Matériau électromagnétique selon la revendication 1, dans lequel chaque particule (23) s'inscrit dans un cube ou un parallélépipède d'une taille inférieure ou égale à 20 nm.

3. Matériau électromagnétique selon la revendication 1 ou 2, dans lequel chaque particule (23) s'inscrit dans un cube ou un parallélépipède d'une taille inférieure ou égale à 10 nm.

4. Matériau électromagnétique selon l'une quelconque des revendications 1 à 3, dans lequel la perméabilité magnétique de chaque particule (23) est supérieure à 3, pour une fréquence comprise entre 5 Ghz et 50 GHz.

5. Matériau électromagnétique selon l'une quelconque des revendications 1 à 4, dans lequel la matrice (25) est un polymère.

6. Matériau électromagnétique selon l'une quelconque des revendications 1 à 4, dans lequel la matrice (25) est un oxyde métallique.

7. Matériau électromagnétique selon l'une quelconque des revendications 1 à 4, dans lequel la matrice (25) est un oxyde de graphène.

8. Matériau électromagnétique selon l'une quelconque des revendications 1 à 7, dans lequel les particules (25) comprennent du fer, du cobalt, du nickel, et/ou un alliage de ces métaux.

9. Matériau électromagnétique selon la revendication 8, dans lequel les particules (23) sont les carbures ou nitrures de fer tels que Fe₃C, Fe₅C₂, Fe₂N, Fe₄N, Fe₁₆N₂.

10. Matériau électromagnétique (13) selon l'une des revendications 1 à 9, dans lequel les particules (23) sont recouvertes d'une couche superficielle de protection en matériau inorganique ou organique tels le graphène, le graphite, le carbone amorphe, un oxyde métallique ou un polymère.

11. Elément inductif (11) comportant un matériau électromagnétique (13) selon l'une quelconque des revendications 1 à 10, caractérisé en ce sens que la valeur d'inductance est plus élevée (par exemple de 10 %, 30 %, 50 %, 100 %, 200 %) à une température inférieure ou égale à 4 K qu'à la température ambiante.

12. Elément inductif (11) selon la revendication 11, fonctionnant à une température inférieure ou égale à 4K.

## Patentansprüche

1. Elektromagnetisches Material (13) für eine bei kryogenen Temperaturen arbeitende Induktivität, das in einer elektrisch isolierenden Matrix (25) Metall-Nanopartikel (23) mit superparamagnetischem Verhalten mit einer Größe von weniger als oder gleich 30 nm aufweist.

2. Elektromagnetisches Material nach Anspruch 1, bei dem jedes Teilchen (23) in einen Würfel oder ein Parallelepiped mit einer Größe von höchstens 20 nm passt.

3. Elektromagnetisches Material nach Anspruch 1 oder 2, wobei jedes Teilchen (23) in einem Würfel oder Parallelepiped mit einer Größe von weniger als oder gleich 10 nm passt.

4. Elektromagnetisches Material nach einem der Ansprüche 1 bis 3, wobei die magnetische Permeabilität jedes Teilchens (23) größer als 3 ist, für eine Frequenz zwischen 5 GHz und 50 GHz.

5. Elektromagnetische Material nach einem der Ansprüche 1 bis 4, wobei die Matrix (25) ein Polymer ist.

6. Elektromagnetisches Material nach einem der Ansprüche 1 bis 4, wobei die Matrix (25) ein Metalloxid ist.

7. Elektromagnetisches Material nach einem der Ansprüche 1 bis 4, wobei die Matrix (25) ein Graphenoxid ist.

8. Elektromagnetisches Material nach einem der Ansprüche 1 bis 7, wobei die Partikel (25) Eisen, Kobalt, Nickel und/oder eine Legierung dieser Metalle aufweisen.

9. Elektromagnetisches Material nach Anspruch 8, wobei die Teilchen (23) Eisenkarbide oder -nitride wie Fe₃C, Fe₅C₂, Fe₂N, Fe₄N, Fe₁₆N₂ sind.

10. Elektromagnetisches Material (13) nach einem der Ansprüche 1 bis 9, wobei die Partikel (23) mit einer schützenden Oberflächenschicht aus anorganischem oder organischem Material wie Graphen, Graphit, amorphem Kohlenstoff, Metalloxid oder Polymer bedeckt sind.

11. Induktives Element (11) aufweisend ein elektromagnetisches Material (13) nach einem der Ansprüche 1 bis 10, **dadurch gekennzeichnet, dass** der Induktivitätswert bei einer Temperatur von weniger als oder gleich 4 K höher (z.B. um 10%, 30%, 50%, 100%, 200%) ist als bei Raumtemperatur.

12. Induktives Element (11) nach Anspruch 11, das bei einer Temperatur kleiner oder gleich 4 K arbeitet.

## Claims

1. An electromagnetic material (13) for an inductance operating at cryogenic temperatures comprising, in an electrically insulating matrix (25), metal nanoparticles (23) with superparamagnetic behavior of size less than or equal to 30 nm.

2. The electromagnetic material according to claim 1, wherein each particle (23) inscribe in a cube or parallelepiped of size less than or equal to 20 nm.

3. The electromagnetic material according to claim 1 or 2, wherein each particle (23) inscribes in a cube or parallelepiped of size less than or equal to 10 nm.

4. The electromagnetic material according to any one of claims 1 to 3, wherein the magnetic permeability of each particle (23) is greater than 3, for a frequency comprised between 5 GHz and 50 GHz.

5. The electromagnetic material according to any one of claims 1 to 4, wherein the matrix (25) is a polymer.

6. The electromagnetic material according to any one of claims 1 to 4, wherein the matrix (25) is a metal oxide.

7. The electromagnetic material according to any one of claims 1 to 4, wherein the matrix (25) is a graphene oxide.

8. The electromagnetic material according to any one of claims 1 to 7, wherein the particles (25) comprise iron, cobalt, nickel, and/or an alloy of these metals.

9. The electromagnetic material according to claim 8, wherein the particles (23) are iron carbides or nitrides such as Fe₃C, Fe₅C₂, Fe₂N, Fe₄N, Fe₁₆N₂.

10. The electromagnetic material (13) according to any of claims 1 to 9, wherein the particles (23) are covered with a protective surface layer of inorganic or organic material such as graphene, graphite, amorphous carbon, metal oxide or polymer.

11. An inductive element (11) comprising an electromagnetic material (13) according to any one of claims 1 to 10, **characterized in that** the inductance value is higher (e.g., by 10%, 30%, 50%, 100%, 200%) at a temperature less than or equal to 4 K than at room temperature.

12. The inductive element (11) according to claim 11, operating at a temperature less than or equal to 4K.
